# EUROPEAN PATENT APPLICATION

(11) **EP 1 597 971 A1**
(43) Date of publication of application: **23.11.2005**
(21) Application number: 05253096.1
(22) Date of filing: 19.05.2005
(51) Int. Cl.: A21B 3/13

(54) **Production of food products**

(30) Priority: 21.05.2004 GB 0411407
(71) Applicant: UNITED BISCUITS (UK) LIMITED, Hayes, Middlesex UB4 8EE (GB)
(72) Inventor: Townsend, Geoffrey M., Bucks HP16 0EZ (GB); Davey, Michael John, Oxon OX39 4HE (GB)
(74) Representative: Stallard, Gillian Kathleen

(57) **Abstract**

A process for the production of food products which comprises depositing portions of a batter or dough in each of an array of hollow moulds (3), and covering the moulds with an array of lids (5), there being a lid for each mould. Each mould and its associated lid forms an enclosure (6) which provides a covered region above the batter or dough into which it can expand while allowing the escape of water vapour from within the said covered region. The portions are then cooked in an oven.

## Description

The invention relates to the production of food products, and especially to the production of food products by cooking portions of a batter or dough in an oven to form, for example, cakes, including muffins.

In the manufacture of muffins, it is usual practice to deposit portions of muffin batter in open corrugated paper cases located in recesses in metal muffin trays, and then bake the portions either in a static oven or by passing the trays through a tunnel oven, sometimes referred to as a continuous oven or a conveyor oven, to form muffins. During baking, the muffin batter rises in the paper cases and expands over and around the top of the cases, with the final shapes of the muffins tending to vary.

The present invention provides a process for the production of food products which comprises depositing portions of a batter or dough in each mould of an array of hollow moulds, covering the moulds with an array of lids, there being a lid for each mould, and each mould and its associated lid forming an enclosure which provides a covered region above the batter or dough into which it can expand while allowing the escape of water vapour from the said covered region, and then cooking the said portions in an oven.

The invention also provides apparatus for the production of food products which comprises an array of hollow moulds, means for depositing a portion of batter or dough into each of the moulds, an array of lids, one for each mould, which can be arranged to cover the moulds to provide an array of enclosures each of which provides a covered region above the batter or dough into which it can expand and from which water vapour can escape, and an oven for cooking the said food products.

The process and apparatus of the invention are especially advantageous in the manufacture of cakes, which expression is used in this specification to include muffins, and more especially the manufacture of cakes of relatively small volume. With the process and apparatus of the invention, it has been found possible to produce such cakes having a more uniform top surface, a more regular overall configuration and a more uniform size than in conventional production. The invention also enables the production of cakes having a higher moisture content with a lighter, softer-eating, texture than would normally be associated with a baked product of the same size produced in a conventional manner. Thus, it is possible to produce relatively small cakes with a texture that would normally be associated with a larger product.

It is thought that these advantages are achieved in the process and apparatus of the invention because, during cooking, within the covered region above the batter in the enclosure formed between each mould and its lid there is an increase in pressure relative to the ambient pressure as the batter increases in volume and rises up into the region, and also because of the release of water vapour by the batter into that region during cooking. Thus, the batter in the enclosure is effectively exposed to a moist environment under a pressure greater than ambient pressure and crust formation is slowed down. The pressure within the said covered region above the batter should not, however, be allowed to increase relative to the ambient pressure to such an extent that expansion of the batter in the enclosure is inhibited, and accordingly in the process and apparatus of the invention water vapour is allowed to escape from the said region, preferably, through one or more vents in the lid. The exact number, size and configuration of the vents required in any particular case will depend on the product to be manufactured, but, in practice, a suitable arrangement of the vent or vents in each lid to achieve the desired configuration and texture of the product can readily be determined by simple trials. Where a single vent in each lid suffices, then advantageously the vent is arranged centrally in the lid. Where it is found desirable to provide more than one vent in each lid, then, preferably, the vents are arranged symmetrically in the lid.

It has been found that the quantity of batter deposited in each enclosure does not need to be such that the batter rises into contact with the interior surface of the lid in order to produce the uniformity in the final shape. The advantage of a more uniform product can be obtained even when the entire enclosure is not completely filled with the cooked food product.

With the process and method of the invention, there is also an added advantage that it is not necessary to use corrugated paper cases in the production of muffins, resulting in a cost saving in their manufacture.

The shape and configuration of each mould and its associated lid should be chosen in accordance with the requirements of size and shape of the finished product. Advantageously, each mould and its associated lid are so arranged that the enclosure they define is of substantially spherical, substantially ellipsoidal, or substantially cuboidal configuration. Each of the said enclosures is advantageously of up to 25cm³ , preferably, up to 22.5cm³, and more preferably, up to 20cm³ in volume, and advantageously of at least 5cm³ in volume. In the production of a food product of a symmetrical shape, for example, a sphere, an ellipsoid, or a cube, each of the moulds and its associated lid may be of the same dimensions and configuration as each other. Advantageously, the array of moulds is arranged as a tray and preferably the array of lids is also arranged as a tray. Each tray of lids can then be placed on a corresponding tray of moulds, in use, to form the array of enclosures in a set of trays.

After the food products have been cooked, it may be required to carry out secondary processing such as applying a coating to the food product, for example, a coating of chocolate carried out by dipping, rolling or enrobing. For such secondary processing, it may be convenient to retain the food products in one of the trays while removing the other so that the exposed surface of the food products can be, for example, coated in chocolate or other topping. Thus, for example, it may be required to remove the lids from the food products and invert the food products while retaining them in the moulds for dipping in chocolate. When it is desired to retain the food products in either the moulds or the lids for such secondary processing, then the moulds and/or the lids may be so configured as to achieve that, by, for example providing the inner surface of the moulds and/or the lids with retaining means such as recessed and/or projecting portions, for example, annular ridges projecting inwardly. Alternatively, or even in addition, the overall shape of the mould and/or its lid may be so configured as to be able to retain the food product in one of them on removal of the other. For example, in the case of a spherical enclosure as mentioned above, the mould may be arranged to define a greater part of the sphere than its associated lid and be able to retain the food product even on inversion.

The trays of moulds and/or lids may be made of steel, preferably provided with suitable coating such as Teflon on the surfaces that contact the food products. Alternatively and advantageously, to aid removal of the food products when desired, the trays of moulds and/or lids may be made from a flexible material, for example, a high temperature resistant silicone rubber. Such flexible trays are preferably provided with reinforcement to prevent distortion at high temperatures. In either case, the moulds and lids may have non-stick finish or the process may include coating the moulds and lids with a release agent before the portions of batter or dough are deposited. To ensure removal of the food products when desired, means, for example, suction means may be provided to act on the food products. With flexible trays as referred to above, release can be ensured by flexing the trays and/or using pushers, robots or spikes. If it is not required to hold the food products in the moulds for secondary processing as referred to above, then the moulds may be so arranged that inversion of the moulds on its own is sufficient to ensure removal.

The batter or dough from which the food products are made may contain inclusions such as chocolate chips or fruit pieces added before deposition in the moulds. Each portion of the batter or dough may have a filling inserted into it before cooking. The filling may be fat-based, for example, a cream, or water-based, for example, a jam. The filling is advantageously inserted as the portion of batter or dough is deposited in the mould. That can be carried out either using three depositers, the first for batter or dough, the second for the filling, and the third for batter or dough to cover the filling, arranged adjacent to one another in series, or by using a so-called "co-depositer" as used in the confectionery industry, which can deposit a portion of the batter or dough with the filling at the same time. It has been found that such a filling tends to act as barrier to heat and generally inhibits rise of the food product. There is also a tendency in conventional processes for any such fillings to sink to bottom of the food product. Surprisingly, it has been found in the process and apparatus of the invention that any such filling tends to be retained in a more central position in the food product.

Advantageously, the food products are cooked in the oven for a period within the range of from 5 to 10min, preferably at a temperature within the range of from 160 to 240°C. Cooking is advantageously carried out by passing the food products through a tunnel oven. Preferably, the food products are then allowed to cool by passing through a cooling tunnel, before secondary processing, if any, removal from the moulds and lids, and packaging. The lids and moulds may then be returned for cleaning and/or reuse. When the food products are cakes (including muffins) the final moisture content of the food products (excluding any coating, inclusions or filling) is advantageously within the range of from 12 to 22% by weight of water based on the total weight of the product, and preferably within the range of from 14 to 20% by weight of water based on the total weight of the product (excluding any coating, inclusions or filling).

The process and apparatus of the invention can also be used to manufacture other individual products in addition to cakes, by which is generally meant a product usually made from a cereal-based batter that is mechanically or chemically aerated and cooked in an oven, the cake having a final moisture content of at least 10% by weight based on the weight of the cake. Other such products that can be made in accordance with the invention include cookies or biscuits, which may be made from a short dough, and are generally cooked until they have a moisture content of less than 5% by weight, typically 2-3% by weight, based on the weight of the cooked product. If the food products are made from dough instead of batter, then the dough is advantageously deposited into the moulds by sprinkling on the dough, and scraping away any excess.

A process and apparatus for the production of baked food products in accordance with the invention will now be described, by way of example, with reference to the accompanying drawings, in which:
Fig. I is a plan of an array of moulds in the form of a tray;
Fig. 2 is a cross-section through the array of Fig. I taken along the line A-A;
Fig. 3 is a cross-section through an array of moulds in the form of a tray similar to that of Figs. 1 and 2 together with an array of lids, also in the form of a tray;
Fig. 4 is a diagram of the apparatus of the invention;
Fig. 5 is a diagram of the apparatus of the invention including apparatus for secondary processing;
Figs. 6A and 6B show diagrammatically other configurations for a mould and a corresponding lid, respectively, for use in the apparatus of Fig. 5;
Fig. 7 shows diagrammatically further configurations for moulds and corresponding lids for use in the apparatus of Fig. 5; and
Figs. 8 and 9 show yet further configurations for moulds and corresponding lids in accordance with the invention.

Referring to the drawings, and initially to Figs. I to 3, an array of moulds, indicated generally by the reference numeral 1, is formed as a tray 2 made from a flexible material, for example, HT60EONT/1 grade silicone rubber compound obtained from Silicon Technology. The tray 2 is formed with end portions 2a and 2b, respectively, and side portions 2c and 2d, respectively, around a central portion 2e.

Within the central portion 2e are two rows of identical hollow concave moulds 3. Each of the moulds 3 is equally spaced from its adjacent moulds in the same row and from an adjacent mould in the adjacent row. A reinforcing bar (not shown) extends down the middle of the tray 2 between the two rows of the moulds 3, and prevents distortion of the tray at high temperatures.

As an example of suitable dimensions for the tray 2, the tray may be of an overall length of 490mm and width of 108mm. Each of the moulds 3 may be of a maximum depth of 19.5mm and of a maximum diameter of 31mm, and spaced from each other at 45mm centres.

A matching tray 4 of domed concave lids 5, which is identical in shape to an inverted tray 2 of moulds 3, is provided to cover the tray 2 of moulds so that each of the domed lids covers one of the hollow moulds 3 and forms an enclosure 6 of ellipsoid configuration. A vent 7 in the form of an aperture positioned centrally in the top of each of the lids 5 allows water vapour to escape from the enclosures, in use.

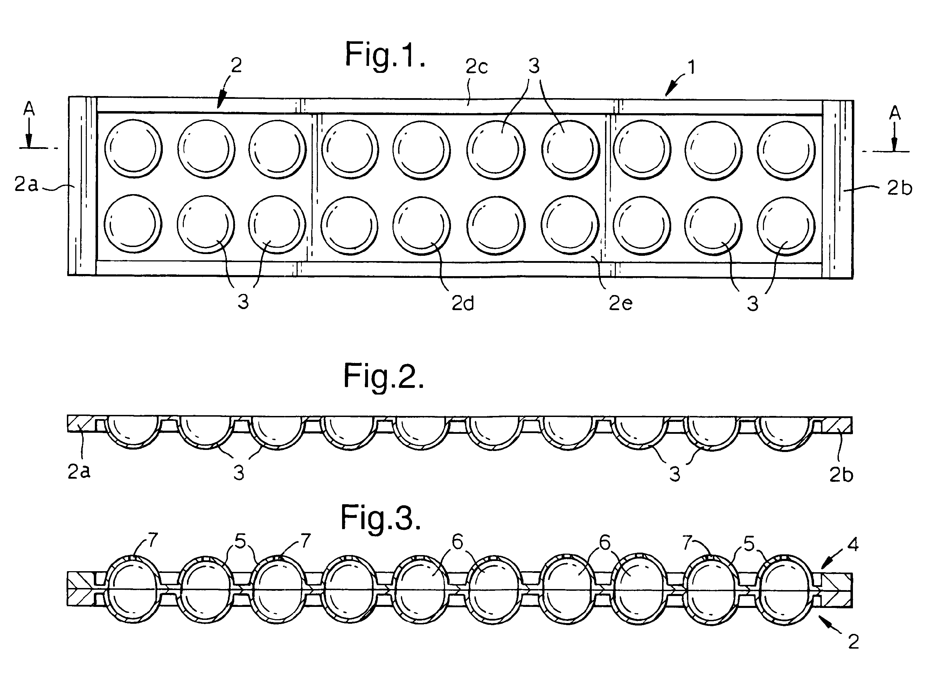

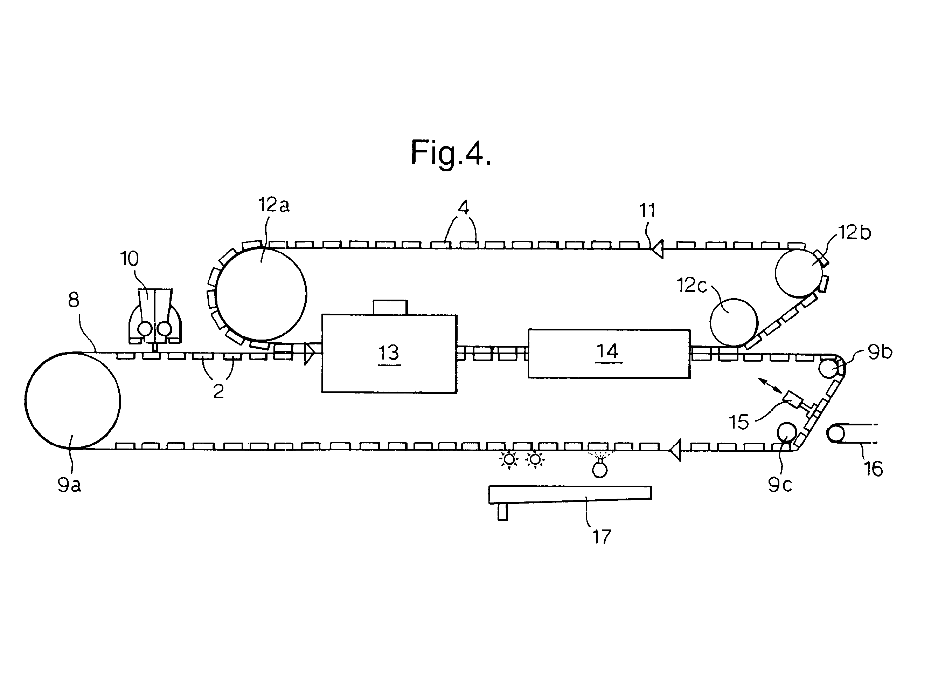

In apparatus as shown in Fig. 4, a series of the trays 2 are secured to a conveyor belt 8 driven by rollers 9a, 9b and 9c, respectively, so that each tray in turn passes under a co-depositer 10. The co-depositer 10 is arranged to deposit a portion of batter with a portion of filling within the batter into each mould 3. A further conveyor belt 11 driven by rollers 12a, 12b and 12c carries a series of the trays 4 of the domed lids 5 and is arranged to place a tray 4 of lids over a tray 2 of moulds 3 after the tray 2 leaves the co-depositer 10, the tray 4 of lids and the tray 2 of moulds forming an array of substantially ellipsoidal enclosures 6 as shown in Fig. 3.

The sets of trays 2 and 4 are then passed through a tunnel oven 13 and cooling tunnel 14. The trays 4 of lids are then removed by the conveyor 11 and returned for re-use by the conveyor. The trays 2 are flexed as they travel over the roller 9b, and a reciprocating mechanism 15 is provided to push each of the moulds outwardly to ensure removal of the food products. A conveyor 16 is provided to transport the food products, after removal from the trays 2, to a packaging station (not shown). The trays 2 remain on the conveyor 8 and are returned through a wash station 17 for re-use.

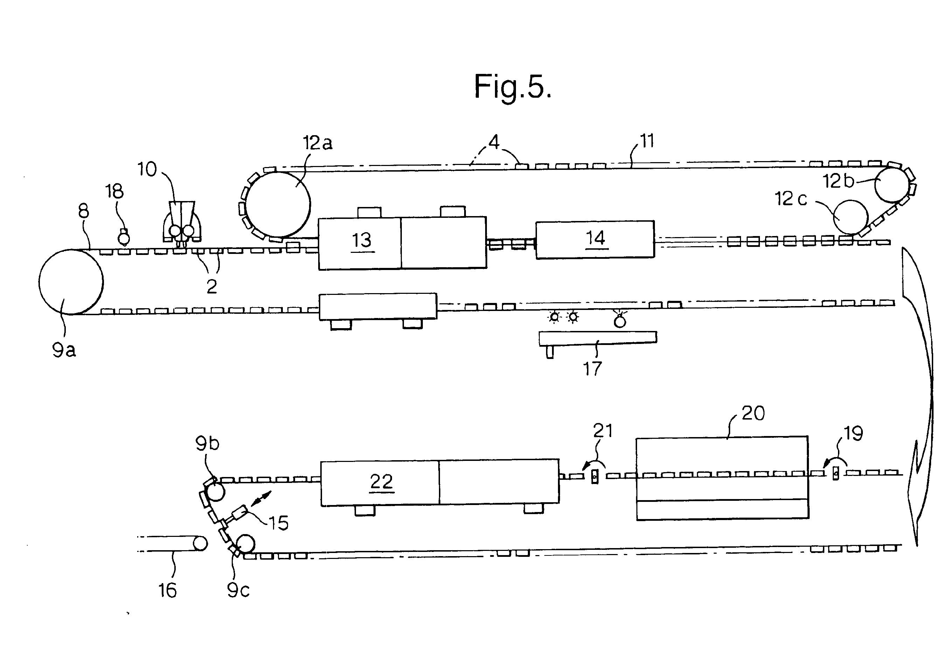

Fig. 5 shows the same apparatus as Fig. 4 (the same reference numerals being used for the same parts where appropriate) except that an initial greasing station 18 is provided to coat the trays 2 with a release agent before they pass under the co-depositer 10, and also secondary processing apparatus is provided between the cooling tunnel 14 and the reciprocating release mechanism 15. The secondary processing apparatus consists of an inversion station 19 where the trays 2 of the moulds 3 are inverted through 180°, a chocolate dipping station 20 where the exposed surfaces of the inverted food products are coated in chocolate, and a further inversion station 21, where the trays are once again inverted through 180° , and their exposed, chocolate-coated surfaces are uppermost. The trays 2 then pass through a further cooling tunnel 22 to allow the chocolate to set, and the food products are finally removed from the trays using the reciprocating mechanism 15 and conveyed to the packaging station via the conveyor 16.

In operation, portions of batter with a filling are deposited in the moulds 3 as the trays 2 pass under the co-depositer 10. The moulds 3 of the tray 2 are then covered with the domed lids 5 of the tray 4 and the food products are cooked as they pass through the tunnel oven 13. The batter rises up in each of the enclosures 6 during cooking and water vapour is emitted into the region of the enclosure above the batter and through the vents 7 in the lids 5. After passing through the cooling the tunnel 14, the trays 4 of the lids 5 are removed and either the food products are removed from the moulds 3 for packaging or they are retained in the moulds for secondary processing during which the trays 2 are inverted, the exposed surfaces of the food products coated in chocolate, and the trays inverted again. After allowing the chocolate to set in the cooling tunnel 22, the food products are removed from the moulds 3 and packaged.

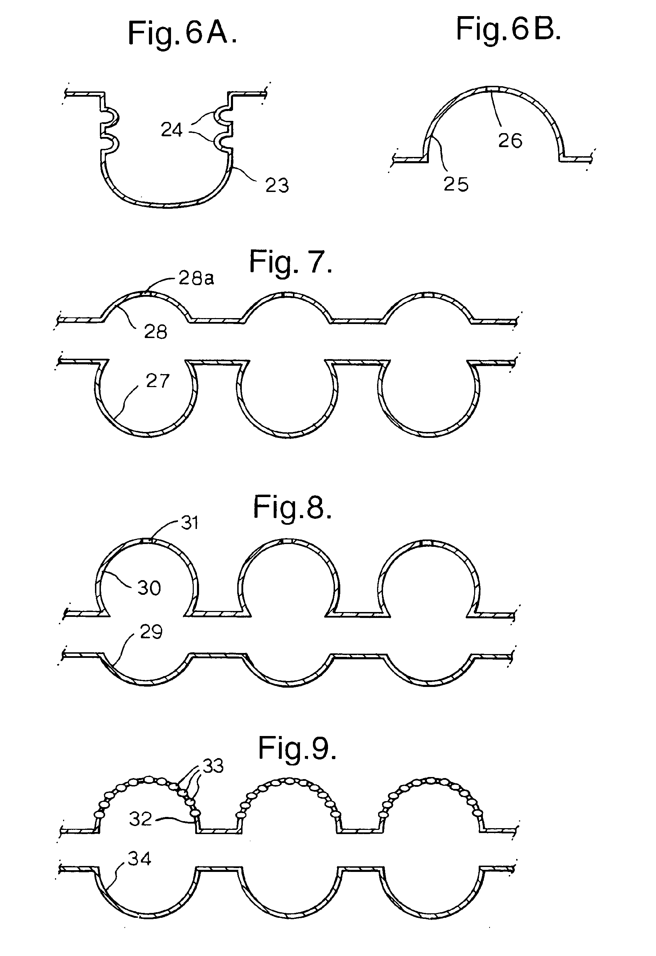

When the trays 2 are to be inverted during secondary processing at the inversion station 19 for dipping in chocolate at the dipping station 20 as shown in the apparatus of Fig. 5, the moulds 3 of the trays 2 may be replaced with moulds 23 as shown in Fig. 6A. Each mould 23 is provided with annular ridges 24 projecting inwardly. Its corresponding lid 25 is provided with a central vent 26 as shown in Fig. 6B. As the food product cooks within the mould 23 and its associated lid 25, it rises around the ridges 24, which serve to aid retention of the food product in the mould on removal of the lid 25 and inversion of the mould at the inversion station 19 and at the dipping station 20. After reinversion at the station 21 and passing through the cooling tunnel 22, the moulds 23 can be flexed by the reciprocating mechanism 15, which pushes the moulds outwardly and ensures removal.

Instead of the mould 23 and lid 25, an array of moulds 27 and lids 28 may be used as shown in Fig. 7. Each mould 27 and its associated lid 28 having a central vent 28a together define a substantially spherical enclosure, but each of the moulds 27 defines a greater part of the sphere than its associated lid, which tends to assist retention of the food product in the mould after removal of the lid and on inversion of the mould.

The apparatus of Fig. 5 may be modified so that instead of the trays 4 of the lids 5 being removed from the food products before secondary processing and the food products remaining in the moulds 3, the food products are arranged to remain in the lids and the moulds are removed before secondary processing. In the modified apparatus there is no need to provide the inversion stations 19 and 21. In such an arrangement, the moulds and lids may be as shown in Fig. 8 or Fig. 9. In the arrangement shown in Fig. 8, each mould 29 and its associated lid 30 with vent 31 together define a substantially spherical enclosure, but each of the lids 30 defines a greater part of the sphere than its associated mould 29, which tends to assist retention of the food product in the lid after removal of the mould for secondary processing. In Fig. 9, each lid 32 is provided with a multiplicity of vents 33, including a central vent and additional vents symmetrically arranged around the central vent, through at least some of which the food product may rise to a small extent on cooking. The lid 32 thereby grips the food product, and mould 34 can be removed while the lid retains the food product in position ready for secondary processing.

The following Examples illustrate the invention:

### Example 1

A batter was made from the following ingredients, the percentages being by weight and based on the total weight of the ingredients:

| | % by weight |
|---|---|
| Water | 22 |
| Humectants | 10 |
| Vegetable oil | 16 |
| Flour | 14 |
| Sugar | 17 |
| Cocoa Powder | 3 |
| Muffin Concentrate | 18 |

The Muffin Concentrate was a commercially available premix obtainable from, for example, Macphies of Glenbervie Limited.

The batter was made from the above ingredients in a Hobart A200 mixer set on a high speed for 3 - 5 minutes.

Using the apparatus of Fig. 5, portions of batter weighing 5.5g each together with a portion of chocolate cream filling weighing 1.5g were deposited by the co-depositer 10 in the moulds 3 of the trays 2. Before each tray 2 of the moulds 3 reached the tunnel oven 13 it was covered with a tray 4 of domed lids 5 so that each portions of the batter and the filling was contained in one of the enclosures 6. Each set of the trays 2 and 4 was conveyed through a zoned tunnel oven 13 set with a maximum temperature of 220°C. The total cooking time was 7 minutes. After exiting the oven 13, each set of the trays 2 and 4 was passed through the cooling tunnel 14 which was of sufficient length to reduce the food product temperature to within the range of from 20 to 30°C. After cooling, each of the trays 4 was removed from the trays 2, leaving the food products in the trays 2. Each tray 2 was then inverted, passed through the chocolate dipping station 20 where the exposed surfaces of the food products were coated in chocolate, and then inverted again so that the food products had their chocolate-coated surface uppermost. The trays 2 were then sent through the cooling tunnel 22 to allow the chocolate to set, before the food products were released from the moulds 3.

It was found that the resulting chocolate-coated chocolate-flavoured sponge cakes with a chocolate cream filling were of consistently uniform shape and had a moist, light texture. The moisture content of the cakes was between 15 and 20% by weight based on the weight of the cake (excluding the filling and the chocolate coating). It was also found that the filling tended to retain a central position in the cake.

### Example 2

A batter was made from the following ingredients, the percentages being by weight and based on the total weight of the ingredients:

| | % by weight |
|---|---|
| Water | 22 |
| Humectants | 10 |
| Vegetable oil | 16 |
| Flour | 16 |
| Sugar | 18 |
| Muffin Concentrate | 18 |

The batter was made in the same manner as the batter of Example 1. Using the apparatus of Fig. 4, portions of the batter weighing 5.5g each together with a portion of jam filling weighing 1.5g were deposited by the co-depositer 10 in the moulds 3 of the trays 2. Before each tray 2 of the moulds 3 reached the tunnel oven 13 it was covered with a tray 4 of domed lids 5 so that each portions of the batter and the filling was contained in one of the enclosures 6. Each set of the trays 2 and 4 was conveyed through the tunnel oven 13 set at a maximum temperature of 220°C. The total cooking time was 7 minutes. After exiting the oven 13, each set of the trays 2 and 4 was passed through the cooling tunnel 14 which was of sufficient length to reduce the food product temperature to within the range of from 20 to 30°C. After cooling, the food products were released from the lids 5 and the moulds 3. The resulting moist sponge cakes with a jam filling were of consistently uniform shape with a light texture.

### Example 3

A batter was made from the following ingredients, the percentages being by weight and based on the total weight of the ingredients:

| | % by weight |
|---|---|
| Water | 14 |
| Humectants | 9 |
| Vegetable oil | 18 |
| Flour | 15 |
| Sugar | 16 |
| Muffin Concentrate | 16 |
| Chocolate Chips | 12 |

The same method was employed as in Example2 with portions of batter of 7g deposited in the moulds, but without a filling. The resulting chocolate chip muffins were found to be moist and of uniform shape.

## Claims

1. A process for the production of food products which comprises depositing portions of a batter or dough in each of an array of hollow moulds, covering the moulds with an array of lids, there being a lid for each mould, and each mould and its associated lid forming an enclosure which provides a covered region above the batter or dough into which it can expand while allowing the escape of water vapour from within the said covered region, and then cooking the said portions in an oven.

2. A process as claimed in claim 1, wherein the water vapour escapes from the said covered region through one or more vents in the lid.

3. A process as claimed in claim 2, wherein one vent is provided in each lid, and the vent is arranged centrally in the lid.

4. A process as claimed in claim 2, wherein more than one vent is provided in each lid and the vents are arranged symmetrically in the lid.

5. A process as claimed in any one of claims 1 to 4, wherein each mould and its associated lid are such that the enclosure they define is of substantially spherical, substantially ellipsoidal, or substantially cuboidal configuration.

6. A process as claimed in any one of claims 1 to 5, wherein each mould and its associated lid are such that the enclosure they define is of a volume of up to 25cm³ , preferably, up to 22.5cm³ , and more preferably, up to 20cm³.

7. A process as claimed in any one of claims I to 7, wherein each mould and its associated lid are such that the enclosure they define is of a volume of at least 5cm³.

8. A process as claimed in any one of claims 1 to 7, wherein the moulds and the lids are such that on removal of either the moulds or the lids from the cooked food product, the food products are retained in the lids or the moulds, respectively.

9. A process as claimed in claim 8, wherein lids are removed, the food products are retained in the moulds, and the moulds are so configured that the food products are retained in the moulds on inversion.

10. A process as claimed in claim 8, wherein after removal of either the moulds and/or the lids from the cooked food products, the food products undergo secondary processing.

11. A process as claimed in any one of claims 1 to 10, wherein the batter or dough contains inclusions.

12. A process as claimed in any one of claims 1 to 11, wherein each portion of the batter or dough has a filling inserted into it before cooking.

13. A process as claimed in any one of claims 1 to 12, wherein the food products are cooked for a period within the range of from 5 to 10min and, preferably, at a temperature within the range of from 160 to 240°C.

14. A process as claimed in any one of claims 1 to 13, wherein the moisture content of the cooked food products (excluding any coating, inclusions or filling) is within the range of from 12 to 22%, preferably 14 to 20%, by weight of water based on the total weight of the cooked food product (excluding any coating, inclusions or filling).

15. A process as claimed in any one of claims 1 to 14, wherein the food product is a cake (including a muffin).

16. A process as claimed in any one of claims to 13, wherein the moisture content of the cooked food products (excluding any coating, inclusions or filling) is less than 5% by weight of water based on the total weight of the cooked food product (excluding any coating, inclusions or filling).

17. A process as claimed in any one of claims 1 to 13 or 16, wherein the food product is a biscuit or cookie.

18. Apparatus for the production of food products which comprises an array of hollow moulds, means for depositing a portion of batter or dough into each of the moulds, an array of lids, one for each mould, which can be arranged to cover the moulds to provide an array of enclosures each of which provides a covered region above the batter or dough into which it can expand and from which water vapour can escape, and an oven for cooking the said food products.

19. Apparatus as claimed in claim 18, wherein each lid is provided with one or more vents to allow the escape of water vapour from each enclosure.

20. Apparatus as claimed in claim 19, wherein one vent is provided in each lid, and the vent is arranged centrally in the lid.

21. Apparatus as claimed in claim 19, wherein more than one vent is provided in each lid and the vents are arranged symmetrically in the lid.

22. Apparatus as claimed in any one of claims 18 to 21, wherein each mould and its associated lid are so arranged that the enclosure they define is of substantially spherical, substantially ellipsoidal, or substantially cuboidal configuration.

23. Apparatus as claimed in any one of claims 18 to 22, wherein each mould and its associated lid are such that the enclosure they define is of a volume of up to 25cm³ , preferably, up to 22.5cm³ , more preferably up to 20cm³ .

24. Apparatus as claimed in any one of claims 18 to 23, wherein each mould and its associated lid are such that the enclosure they define is of a volume of at least 5cm³.

25. Apparatus as claimed in any one of claims 18 to 24, wherein the array of moulds is arranged as a tray and, preferably, the array of lids is arranged as a tray.

26. Apparatus as claimed in any one of claims 18 to 25, wherein the moulds and the lids are such that on removal of either the moulds or the lids from the cooked food product, the food products are retained in the lids or the moulds, respectively.

27. Apparatus as claimed in claim 26, wherein the moulds are so configured that the food products are retained in the moulds on removal of the lids and inversion of the moulds.

28. Apparatus as claimed in claim 25, wherein the trays of moulds and/or lids are made from a flexible material.

29. A food product obtainable by the process as claimed in any one of claims I to 17 or by using the apparatus as claimed in any one of claims 18 to 28.

30. An array of hollow moulds and an array of lids, one for each mould, adapted for use in the process as claimed in any one of claims 1 to 17 or in the apparatus as claimed in any one of claims 18 to 28.
